# EUROPEAN PATENT APPLICATION

(11) **EP 2 325 786 A1**
(43) Date of publication of application: **25.05.2011**
(21) Application number: 10191693.0
(22) Date of filing: 18.11.2010
(51) Int. Cl.: G06Q 10/00

(54) **Stock refilling**

(30) Priority: 18.11.2009 DK 200970212
(71) Applicant: Remmer A/S, 2740 Skovlunde (DK)
(72) Inventor: Remmer, Martin, 2740 Skovlunde (DK)
(74) Representative: Tellefsen, Jens J.

(57) **Abstract**

A method for refilling a store with several types of object, **characterised in**
- that each single type of object has a maximum stock;
- that the consumption rate of each single object is determined;
- that a time interval is determined for each type of object on the basis of how fast the store is emptied, based on the consumption rate and the maximum stock;
- that the store is periodically refilled from a central store according to the shortest time interval such that the store is never emptied; and
- after refilling, the store contains the maximum number of each type of the objects.

## Description

### Field of the Invention

The present invention concerns a method for refilling a store with objects.

### Background of the Invention

In many firms there are stores with utility items, for example office supplies. When a type of office supplies is about to become out of stock, typically additional articles are ordered at an office supplier. Unless the order is effected well ahead in time, there may easily occur periods of time where the store lacks certain types of articles. Moreover, it is required that the number of articles in the store is monitored by a staff member.

### Object of the Invention

The object of the invention is to provide a store and a method contributing to obviate the above described disadvantages.

### Description of the Invention

This is achieved according to the present invention by a method for refilling a store with objects of the type mentioned in the introduction, which is peculiar in
- that each single type of object has a maximum stock;
- that the consumption rate of each single object is determined;
- that a time interval is determined for each type of object on the basis of how fast the store is emptied, based on the consumption rate and the maximum stock;
- that the store is periodically refilled from a central store according to the shortest time interval such that the store is never emptied; and
- after refilling, the store contains the maximum number of each type of the objects.

The store has a maximum physical capacity for each single type of objects stored in the store, or the maximum capacity is set to a certain value which is less that the maximum physical capacity. For some rarely used types of objects or particularly expensive objects it is inexpedient to fill the store to maximum capacity, and it may therefore be necessary to define a lower maximum capacity for a number of objects.

By the consumption rate of the different types of objects is meant the rate at which the objects leave the store. The rate of consumption may be indicated as an average over a period of time, e.g. 2 a week, 4 a day, 1 an hour, etc. The consumption rate may be determined on the basis of previous consumption, and may possibly be adjusted at each periodical delivery such that the consumption rate is in the best possible accordance with the real consumption.

For each type of object is decided the length of the time interval in which the store is emptied. If object type A has a storage capacity of 40 and the consumption rate is 5 a week, the time interval will be 8 weeks. The store may further have an object B with a maximum capacity of 100 and a consumption rate of 20 a week, i.e. the time interval for object type B is 5 weeks.

Based on the fastest consumed article, the time interval by which the store is to be periodically refilled is determined. In a store with object types A and B, the periodical refilling is to be effected every 5 weeks.

The refilling occurs by all types of objects being filled to their maximum capacity. The refilling occurs from a central store.

As the consumption rate and thereby the time intervals may imply some uncertainty, it may be advantageous to perform the periodical refilling by a time interval which is less than the lowest discovered in order to ensure that the store is always full.

According to a further embodiment, the method is peculiar in
- that a plurality of stores are situated at geographically different locations; and
- that groups of stores situated in geographic vicinity of each other are refilled at the same time.

As the periodical refilling time is known for the individual stores, a delivery route from a central store may be planned such that stores situated in geographic vicinity of each other are refilled at the same time. Thereby is achieved that the route from the central store to the individual stores can be minimised without changing the delivery times.

According to a further embodiment, the method is peculiar in that the consumption rate is determined by detecting when the individual object leaves the store.

Hereby is achieved that it is continuously observed when the objects leave the store, and the consumption rate can be determined more accurately. Detection also ensures more rapid delivery since stocktaking does not have to be performed by refilling.

According to a further embodiment, the method is peculiar in that the detection occurs by scanning a barcode.

Hereby is achieved that detection may readily be performed by the persons removing the objects from the store. The barcode may be provided on individual objects or in the compartment in which the objects are located. The barcode reader can be permanently mounted at the store or be a handheld barcode reader. When an object is removed from the store, the associated barcode is scanned. Each type of object is provided a designated barcode.

The barcode reader is advantageously connected with a central store such that the consumption rate is monitored. Furthermore, it is achieved that the precise number of objects to be delivered by the periodical refilling are known in beforehand. The monitoring also safeguards against the store being emptied if the consumption rate of the various objects fluctuates much.

According to a further embodiment, the method is peculiar in that the user of the store pays for the used number of objects after each refilling.

Hereby is achieved that the user of the store only pays for the consumed articles, and thereby does not pay for just having access to the objects. Coupled together with detection via a barcode reader, it will even be very easy to specify exactly the types of objects consumed and the number as well, and thereby the amount to be paid. Typically, the payment will be effected to the central store.

According to a further embodiment, the method is peculiar in that the store is a rack with compartments, where each compartment is associated with one type of object, and where the objects are office supplies.

Hereby is achieved that the method can be used in an office environment where typically a number of office supplies are used. In many office environments, it is the job of a secretary or office girl to ensure that the store with office supplies is filled. This is time-consuming, and often results in some office supplies lacking in the store. By applying the method, the need for monitoring is eliminated while at the same time ensuring that the store always contains at least one of each office article.

According to a further embodiment, the method is peculiar in that the maximum stock of the individual types of objects is determined such that the shortest time interval is greater than a predetermined minimum limit.

In some cases, a few types of objects will have a far higher rate of consumption than other types. For example, in an office ballpoint pens will most often be consumed faster than scissors. Thus it may be necessary to adapt the maximum stock of the individual objects such that the periodical refilling occurs by a time interval exceeding a predetermined minimum limit. If a type of object in the store has a time interval of 2 weeks, and the remaining types of object in the store has a time interval of 10+ weeks, it may be advantageous to extend the storage capacity for the first type of object such that the time interval is raised to e.g. 8 weeks. Hereby, the number of refillings is minimised.

Furthermore, the maximum stock may also be reduced such that object types with a very low consumption rate do not take up so much space in the store. If two object types have a time interval above 20 weeks and the rest of the objects of the store have a time interval below 10 weeks, it may be advantageous to reduce the storage capacity for the two objects to e.g. 10 weeks. Hereby, the storage capacity is optimised.

The invention further includes a rack with office supplies, including one or more drawers with associated types of office supplies, which is peculiar in that each type of office supply is provided with an associated barcode, and that the rack includes a barcode reader and connection to a central store.

Hereby is achieved a practical arrangement for office supplies. In that the rack includes barcodes with associated barcode reader and connection to a central store, it is achieved that the stock level of the individual types of office supplies in the rack can be monitored all the time. Besides, it is precisely known how many articles that are to be filled into the rack by a delivery. The barcodes may be disposed on the drawers or on the articles. The barcode reader may be fixed e.g. at the side of the rack, or it may be in the form of handheld barcode reader.

According to a further embodiment, the rack is peculiar in that the rack includes shelves for types of office supplies.

Hereby is achieved that larger types of office supplies can be disposed in a suitable way. Some types of office supplies, like ring binders and boxes with printing paper, are inexpedient to store in drawers and are therefore better placed on a shelf. Barcodes associated with these objects can be provided on the objects themselves or on the shelf.

According to a further embodiment, the rack is peculiar in that the rack includes a shredder and a container for used batteries.

By delivery of office supplies, paper shredder and batteries can be removed. Hereby is achieved that the users of the rack do not need to consider correct disposal of shredded paper and batteries.

In further embodiments, the rack may also contain containers for other recycled matter or other environmentally harmful material to be disposed in a proper way, for example, used energy saving light bulbs, recyclable plastic etc.

### Description of the Drawing

Fig. 1 shows a rack.
Fig. 2 shows a rack with shelf.
Fig. 3 shows a rack with shelf and paper shredder.
Fig. 4 shows how a central store communicates with different stores.
Fig. 5 shows how the refilling time of a single store is determined.
Fig. 6 shows an extension of the process on Fig. 5.
Fig. 7 shows an extension of the process on Fig. 6.

### Detailed Description of Embodiments of the Invention

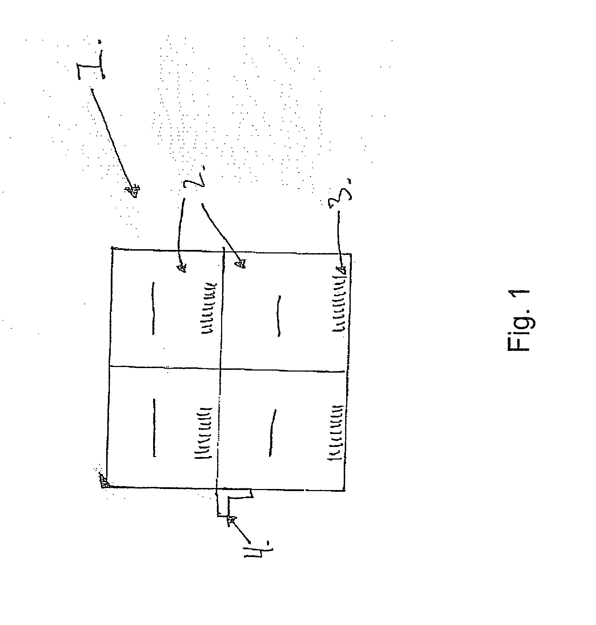

Fig. 1 shows a rack 1 with drawers 2. Each drawer 2 contains a certain type of object, and each type of object has a barcode 3 associated therewith. The barcode can be read by the associated barcode scanner 4.

Use of the rack occurs by a user removing an object from a drawer and scanning the associated barcode with the scanner. The store is refilled based on the recorded consumption. Refilling may occur directly to the drawers, or alternatively the drawers may be replaced with already filled drawers.

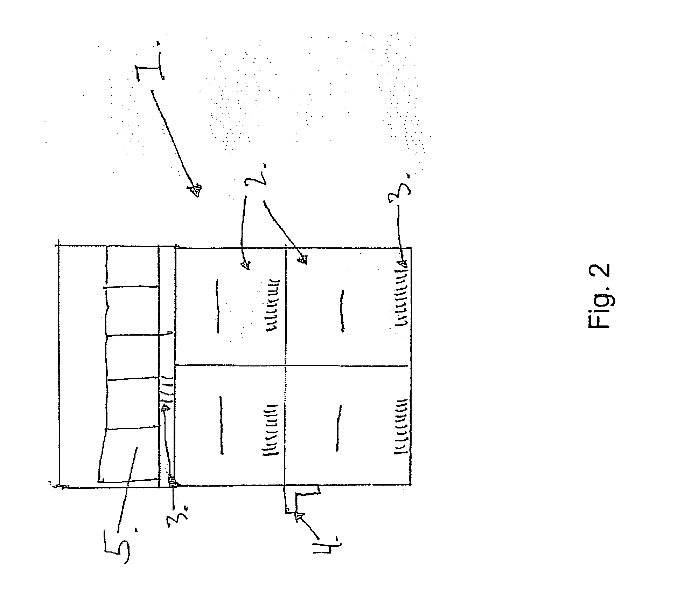

Fig. 2 shows the rack 1 in which, in addition to the drawers 2, a shelf with an associated type of object 5 is provided. A barcode 3 is also found on the shelf.

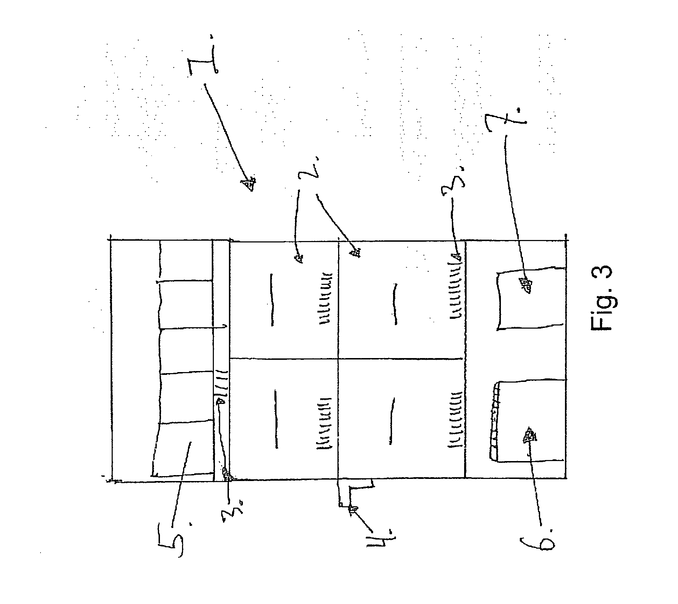

Fig. 3 shows the rack 1 including a shredder 6 and a container for used batteries 7. It is expedient to place these containers on the rack as the containers are then emptied simultaneously with refilling of the store. This ensures safe disposal of the materials. Containers for other office material which is to be disposed in a special way or which may be recycled may also be placed on the rack according to need.

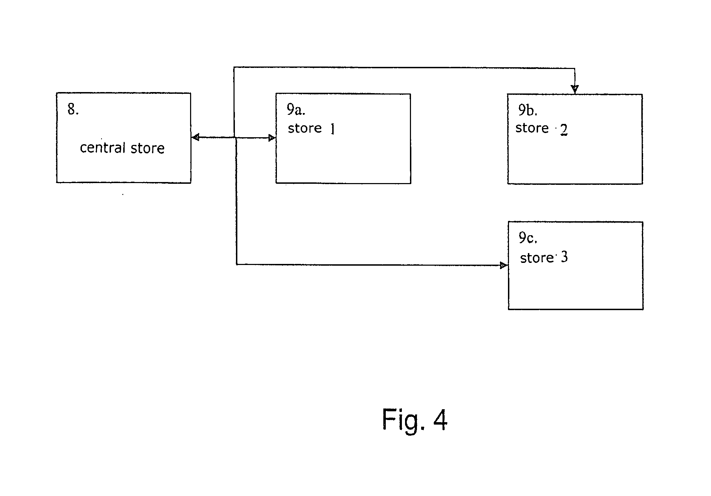

Fig. 4 shows how a central store 8 communicates with different stores illustrated by the boxes 9a, 9b, and 9c. The communication may be used for transmitting information about consumption rate from the scanner 4, thereby continuously keeping track of the number of articles of from the various types of objects of the individual stores.

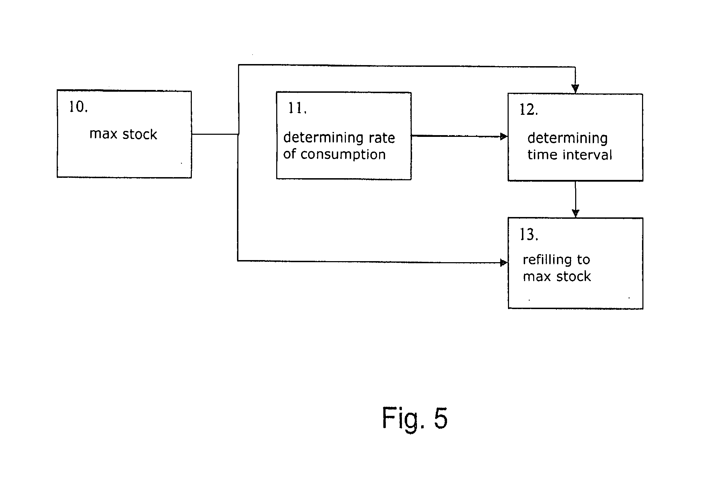

Fig. 5 shows how the refilling time of a single store is determined. In a store, the individual types of object has a maximum stock illustrated by the box 10. For each type of object the consumption rate is determined, i.e. how quickly that type of object leaves store illustrated by the box 11. Based on the maximum stock and the rate of consumption, the time interval for refilling illustrated by the box 12 is determined. The interval is determined as being the time for emptying for the type of object of which the store is running dry the sooner. When the time interval is determined, the store can be refilled periodically to the maximum stock as illustrated by the box 13.

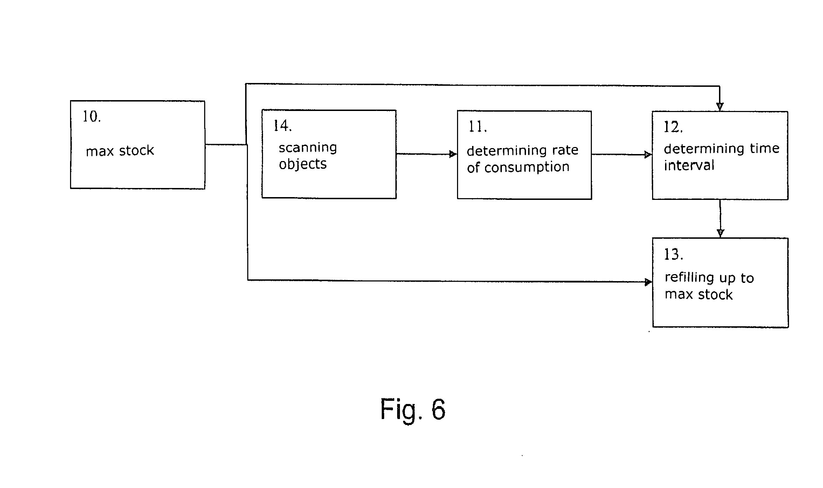

Fig. 6 shows a extension of the process on Fig. 5 where the consumption rate is determined based on scanning of the individual objects when they leave the store. When the user of store removes an object, the associated barcode is scanned as illustrated by the box 14. Based on the scannings, the consumption rate of the various types of objects is determined as illustrated by the box 11. Based on the time interval and the maximum stock of the store, it is determined when the store is to be refilled as illustrated by the box 12. When the time interval is determined, the store can be refilled periodically up to the maximum stock as illustrated by the box 13.

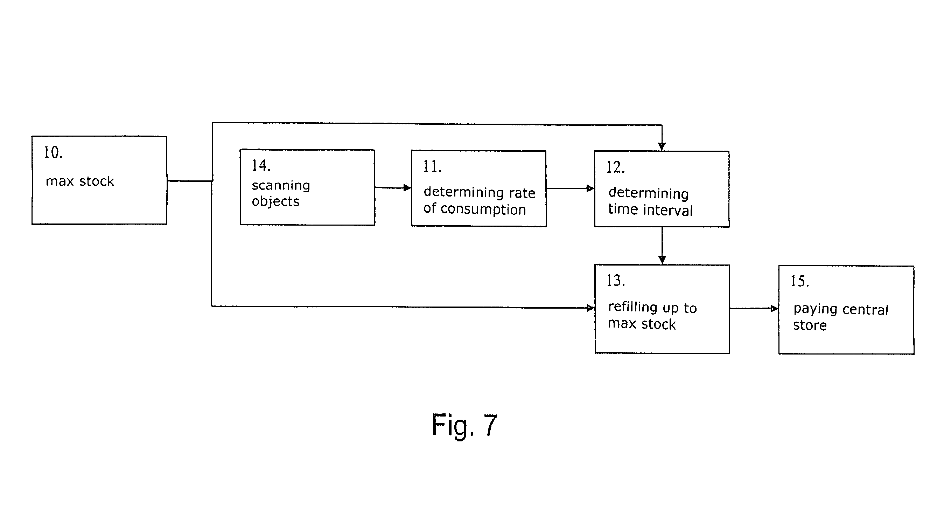

Fig. 7 shows an extension of the process on Fig. 6 where, based on how many and which types of objects that are to be supplied to the store, payment is conducted to the central store. After having filled the store up to maximum stock as illustrated by the box 13, the user of the store is to pay for the consumed goods as illustrated by the box 15. Since the store has just been refilled, it is also known how many and which types of articles that have been supplied to the store, and payment is effected on the basis of a unit price for the individual articles.

## Claims

1. A method for refilling a store with several types of objects, **characterised in**
- **that** each single type of object has a maximum stock;
- **that** the consumption rate of each single object is determined;
- **that** a time interval is determined for each type of object on the basis of how fast the store is emptied, based on the consumption rate and the maximum stock;
- **that** the store is periodically refilled from a central store according to the shortest time interval such that the store is never emptied; and
- after refilling, the store contains the maximum number of each type of the objects.

2. A method for refilling a store according to claim 1, **characterised in**
- **that** a plurality of stores are situated at geographically different locations; and
- **that** groups of stores situated in geographic vicinity of each other are refilled at the same time.

3. A method for refilling a store according to claim 1 or 2, **characterised in that** the consumption rate is determined by detecting individual objects leaving the store.

4. A method for refilling a store according to claim 3, **characterised in that** detection occurs by scanning a barcode.

5. A method for refilling a store according to any preceding claim, **characterised in that** the user of the store pays for the consumed number of objects after each refilling.

6. A method for refilling a store according to any preceding claim, **characterised in that** the store is a rack with compartments, where each compartment is associated with one type of object, and where the objects are office supplies.

7. A method for refilling a store according to any preceding claim, **characterised in that** the maximum stock of the individual types of objects is determined such that the shortest time interval is greater than a predetermined minimum limit.

8. A rack with office supplies, including one or more drawers with associated types of office supplies, **characterised in that** each type of office supply is provided with an associated barcode, and that the rack includes a barcode reader and connection to a central store.

9. A rack according to claim 8, **characterised in that** the rack includes shelves for types of office supplies.

10. A method according to claim 8 or 9, **characterised in that** the shelf includes a shredder and a container for used batteries.
